(19) Europäisches Patentamt
European Patent Office
Office européen des brevets

(11) **EP 2 789 409 B1**

(12) **EUROPEAN PATENT SPECIFICATION**

(45) Date of publication and mention
of the grant of the patent:
**04.05.2016 Bulletin 2016/18**

(51) Int Cl.:
*B21D 26/033* (2011.01)      *F02M 55/02* (2006.01)
*C21D 7/12* (2006.01)       *B23P 9/00* (2006.01)
*F02M 61/16* (2006.01)      *F02M 55/00* (2006.01)

(21) Application number: **12854910.2**

(22) Date of filing: **17.07.2012**

(86) International application number:
**PCT/JP2012/068117**

(87) International publication number:
**WO 2013/084533 (13.06.2013 Gazette 2013/24)**

(54) **AUTOFRETTAGE MACHINING DEVICE**

VORRICHTUNG ZUR AUTOFRETTAGEBEARBEITUNG

DISPOSITIF D'USINAGE PAR AUTOFRETTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2011 JP 2011266063**

(43) Date of publication of application:
**15.10.2014 Bulletin 2014/42**

(73) Proprietor: **Denso Corporation
Kariya-shi, Aichi-ken 448-8661 (JP)**

(72) Inventors:
• **TATEYAMA, Kenta
Kariya-shi
Aichi 448-8661 (JP)**
• **KONDO, Fumio
Kariya-shi
Aichi 448-8661 (JP)**
• **HARA, Yuusuke
Kariya-shi
Aichi 448-8661 (JP)**

(74) Representative: **Kuhnen & Wacker
Patent- und Rechtsanwaltsbüro
Prinz-Ludwig-Straße 40A
85354 Freising (DE)**

(56) References cited:
FR-A1- 2 958 572      JP-A- H10 318 081
JP-A- 2002 310 034    JP-A- 2009 052 452

**Description**

Technical Field

The present invention, for example, relates to an autofrettage apparatus which is used for a machine for forming a high pressure fuel injection pipe or a common rail etc., in particular one operating under a superhigh pressure.

Background Art

As seen in PLTs 1 and 2, the process of applying a high pressure in a sealed state so as to leave residual stress in the structure of a material and thereby raise its strength (called "autofrettage") is known. That is, in autofrettage, high pressure is given to the inside of a work so as to cause plastic deformation at the inside of the work and so as to cause elastic deformation, but not cause plastic deformation at the outside of the work. Due to this, residual compressive stress is given to the work and the work is increased in fatigue strength limit. This process is being utilized for diesel common rail system parts and other parts where a high fatigue strength limit is required for the purpose of imparting residual compressive stress aimed at increasing the fatigue strength. PLT 1 discloses a process which directly inserts a piston of a pressurizing cylinder inside a work so as to raise the pressure. In this process, due to the shape of the work covered by the process (fine bore, short ducts, etc.), various restrictions arose such as an insufficient stroke at the time of raising the pressure or the inability of the piston to be inserted into the work.

Citations List

Patent Literature

PLT 1. German Patent No. 102006054440 (DE102006054440B3)
PLT 2. Japanese Unexamined Patent Publication No. 2004-92551A

An autofrettage apparatus which directly inserts a piston of a pressurizing cylinder inside a work so as to raise the pressure is disclosed in FR 2 958572A1.

Summary of Invention

Technical Problem

The present invention was made in consideration of the above problem and provides a solution to the various restrictions which arise due to the product shape etc.

Solution to Problem

To solve the above problem, the invention of claim 1 provides an autofrettage apparatus comprising a work having a work end opening (14) and internal chamber, wherein the internal chamber is closed except at the work end opening and working oil is filled from the work end opening to the internal chamber a jig which can be attached to or detached from the work and has a straight channel at its inside, the straight channel being configured so as to communicate with the work end opening without leakage through a seal part; a piston which forms a clearance which has a predetermined average clearance amount with respect to an inside wall of the straight channel which is provided at the inside of the jig; and a pressurizing part which drives the piston, wherein the pressurizing part drives the piston so that the piston becomes a predetermined feed speed in the straight channel which is filled by the working oil , and the predetermined feed speed is made faster than a critical feed speed which corresponds to the maximum leakage flow rate per unit time of the working oil which leaks out from the clearance due to the drive operation, whereby the work is autofrettaged.

Due to this, rather than insert the piston in the work, it is possible to insert the piston in the straight channel of the jig by the critical feed speed Vc or more. Further, by inserting the piston in the jig, it is possible to fill superhigh pressure working oil through the seal part to the internal chamber IC of the work 1. Therefore, even when there are various restrictions due to the feed speed limit, product shape of the work, etc., it is possible to freely design the conditions necessary for autofrettage (later explained seat width L and seat circumferential length B) at the jig which can be attached to and detached from the work. That is, by using the jig, even if there are various restrictions, the critical feed speed Vc can be suitably set. Further, it is possible to slash costs by reducing the size of the facility and streamlining the work process (slashing the cycle time etc.)

Preferably the jig is provided with an air bleed passage which communicates with the straight channel. Due to this, it is possible to facilitate bleed of air at the initial filling of working oil.

Preferably the air bleed passage is provided with an air bleed passage stop plug.

Preferably the seal part seals by pressing a seal member with a communication hole which runs between a work end opening of the work and a connecting end opening of a straight channel of the jig without clearance. Due to this, it is possible to make the seal between the work and the jig perfect.

Preferably the seal member is formed by a metal or plastic.

Preferably the seal part seals by pressing together or connecting a work end opening of the work and a connecting end opening of a straight channel of the jig without clearance. Due to this, the seal between the work and the jig can be made perfect.

Preferably either or both of the work end opening of the work or the connecting end opening of the straight channel of the jig are provided with O-rings, ring-shaped projections, tapered surfaces, and threads. Due to this, the seal between the work and the jig can be made perfect.

Note that the above reference notations show examples of the correspondence with the specific examples of the embodiments described later.

Brief Description of Drawings

FIG. 1A is an explanatory view which schematically shows a direct pressurization type autofrettage apparatus and which shows the state before a piston 42 starts to slide.

FIG. 1B is an explanatory view which schematically shows the direct pressurization type autofrettage apparatus and which shows the state after the piston 42 starts to slide.

FIG. 2 is an explanatory view which schematically shows the direct pressurization type autofrettage apparatus.

FIG. 3A is a schematic view which shows a relationship of pressure and time in the apparatus which is shown in FIGS. 1A and 1B when inserting a piston by a certain feed speed $V_0$ into an internal chamber IC to try to make a pressure P of the internal chamber IC rise.

FIG. 3B is an explanatory view which explains the state of FIG. 3A.

FIG. 4A is a graph which shows a waveform of pressure rise when making a feed speed of insertion of a piston into an internal chamber IC $V_1$.

FIG. 4B is a graph which shows a waveform of pressure rise when making a feed speed of insertion of a piston into an internal chamber IC $V_2$.

FIG. 4C is a graph which shows a waveform of pressure rise when making a feed speed of insertion of a piston into an internal chamber IC $V_c$.

FIG. 4D is a graph which shows a waveform of pressure rise when making a feed speed of insertion of a piston into an internal chamber IC $V_3$.

FIG. 4E is a graph which shows a waveform of pressure rise when making a feed speed of insertion of a piston into an internal chamber IC $V_4$.

FIG. 5 is an explanatory view for analyzing a relationship between leakage and pressure.

FIG. 6 is an explanatory view for explaining one example of finding a critical feed speed Vc.

FIG. 7 is a graph which shows a relationship between pressure and leakage flow rate and the critical feed speed Vc when changing an average clearance amount "h".

FIG. 8 is a graph which shows a relationship between an internal chamber pressure and a maximum leakage flow rate Qmax and average clearance amount "h" when changing a working oil.

FIG. 9 is a graph which shows a waveform of pressure rise when changing a seat width L of a clearance 3 from "a" to "b".

FIG. 10 shows one example of a fuel injector which is used in a diesel engine.

FIG. 11A is a cross-sectional view which shows an example of a member which is used for the fuel injector.

FIG. 11B is a cross-sectional view which shows an example of a member which is used for the fuel injector.

FIG. 12 is a schematic perspective view which explains an embodiment of the present invention.

FIG. 13 is a schematic perspective view which explains an embodiment of the present invention.

FIG. 14 is a schematic perspective view which explains an embodiment of the present invention of FIG. 13.

FIG. 15A is a cross-sectional view which shows an example of a seal member 55'.

FIG. 15B is a cross-sectional view which shows a modification of a seal member 55'.

FIG. 15C is a cross-sectional view which shows a modification of a seal member 55'.

FIG. 16A is a cross-sectional view which shows a modification of a seal part.

FIG. 16B is a cross-sectional view which shows a modification of a seal part.

FIG. 16C is a cross-sectional view which shows a modification of a seal part.

FIG. 16D is a cross-sectional view which shows a modification of a seal part.

FIG. 16E is a cross-sectional view which shows a modification of a seal part.

Description of Embodiments

The present invention will be more clearly understood if considering the description of the embodiments of the present invention as explained below with reference to the attached drawings. Below, referring to the drawings, embodiments of the present invention will be explained. In the embodiments, parts of the same configuration will be assigned the same reference notations and explanations will be omitted. The embodiments of the present invention assign the same reference notations to the parts of the same configuration as the basic art forming the foundation of the present invention and omit explanations thereof.

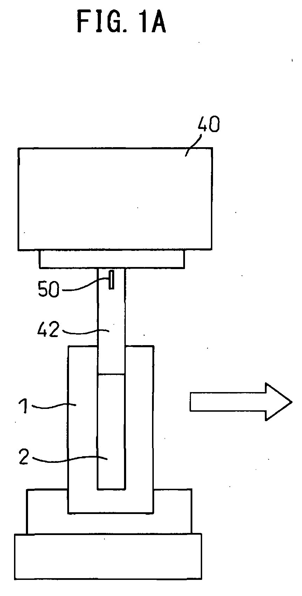

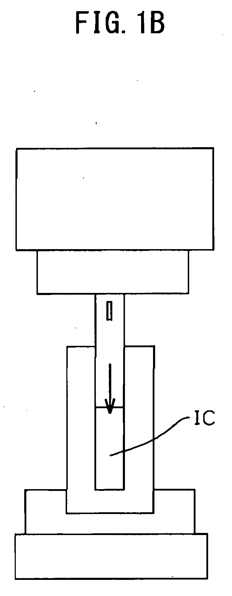

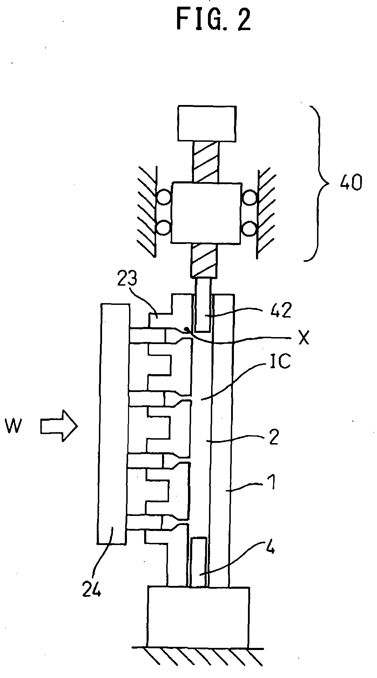

Direct Pressurization Type Autofrettage Before explaining an embodiment of the present invention, first, the basic art which forms the foundation of the present invention, that is, a direct pressurization type autofrettage apparatus, will be explained. Note that the embodiments of the present invention are predicated on a direct pressurization type autofrettage apparatus. FIGS. 1A, 1B, and 2 are explanatory views which schematically show direct pressurization type autofrettage. As examples of a work 10 which is autofrettaged under a high pressure, in particular parts of a diesel common rail system and other parts where a high fatigue strength limit is required may be mentioned. In addition, the present invention can be applied to a part which requires that residual compression be given for the purpose of increasing the fatigue strength. In the following explanation, the embodiments of the present invention will be explained with reference to examples of the case of autofrettage of a work 1 constituted by a high pressure fuel injector, a rail for common rail use, a cylinder pump, etc.

In FIGS. 1A and 1B, the inside of the work 1 which is shown schematically as a sealed work is filled with working oil 2. At a pressurizing part 40 which has a servo motor (drive motor), a piston 42 is connected. Note that the pressurizing part 40 does not necessarily have to be connected with the piston 42. This piston 42, as shown in FIG. 2, is inserted so as to have a clearance 3 comprised of an average clearance amount "h" (as one example, 1 to 30 $\mu$m) with respect to the inside walls of one end part of the work 1. For this reason, to enable the average clearance amount "h" to be maintained even if the piston 42 is inserted, the pressurizing part 40 and the work 1 are fixed to the facility so that the axial direction of the inside of the work 1 at least in the range where the piston 42 is inserted, the axial direction of the piston 42, and the pressurizing axial direction of the pressurizing part 40 match.

Further, pipe openings 23 of the work 1 are sealed in a state with a sealing member 24 inserted and with a pressure W applied, while the other end of the work 1 is sealed by a seal pin 4, so the work 1 becomes a structure which is sealed except for at the above one end. Due to the piston 42, the inside of the work 1 is formed with an internal chamber IC. Further, to measure the pressure P of the internal chamber IC of the work 1, the piston 42 has a strain gauge 50 attached to it. The pressure P of the internal chamber IC is calculated from the amount of deformation of the piston 42. Note that as the servo motor which is included at the pressurizing part 40, a fluid pressure actuator (oil pressure actuator) may also be utilized. Further, an electric motor may be used to turn a screw for pressurization.

Next, the operation in the above configuration will be explained. The other end side of the work 1 is sealed by the seal pin 4, the sealing member 24 is inserted in the pipe openings 23 of the work 1, and pressure W is applied to seal it. In that state, working oil 2 is filled in the work 1. Next, the piston 42 is inserted from one end side of the work 1 and the noninsertion side of the piston 42 is connected to the pressurizing part 40. Here, the piston 42, as explained above, is set so as to have a clearance 3 which is comprised of a predetermined average clearance amount "h" with respect to one end part of the work 1. No seal rings etc. at all are used between the piston 42 and the inside walls of the work 1.

In this state, if using the pressurizing part 40 to insert the piston 42 in the work 1 at a predetermined feed speed "v", working oil 2 will leak out from the clearance 3 between the inside walls of the work 1 and the piston 42, but by setting the above predetermined feed speed "v" to be faster than that leakage speed, that is, inserting the piston 42 inside of the work 1 by a speed of at least the speed by which working oil 2 leaks out from the clearance 3, the working oil 2 which is filled at the inside of the work 1 is compressed and the pressure inside of the work 1 is made to rise.

By doing this, in the autofrettage apparatus, it is possible to perform autofrettage without using seal rings and possible to greatly reduce part consumption due to wear. Further, in the past, if the inside pressure caused deformation to occur, the clearance could not be reduced to zero, so the pressurizing part of the working oil had to be extremely thick and a giant housing was required. By eliminating this giant, expensive housing of the pressurizing part, it is possible to simplify and slim down the structure of the facility and possible to perform autofrettage by a low expense and depreciation.

Critical Feed Speed Vc and Maximum Leakage Flow Rate Qmax Per Unit Time Next, the predetermined feed speed "v" when inserting the above-mentioned piston 42 into the work 1 will be explained and what the critical feed speed Vc and maximum leakage flow rate Qmax per unit time are will be explained. A viscosity $\eta$ of the working oil 2 which is filled at the inside of the work 1 can be expressed by the following formula 1 when designating the pressure of the oil as "P":

$$\eta=\eta_0\exp(\alpha P)\cdots\text{formula 1}$$

Here, $\eta_0$ is the viscosity under atmospheric pressure (ordinary pressure viscosity), while $\alpha$ is the viscosity-pressure coefficient (one inherent to liquid). This stands for all liquids (see Tribologist, vol. 49, no. 9 (2004), pp. 720 to 721).

As will be understood from this formula 1, if the pressure P rises, the viscosity $\eta$ will exponentially increase. That is, if making the piston 42 descend at a high speed and making the pressure P of the internal chamber IC of the work 1 rise, this will act to make the inside working oil 2 rise in viscosity and the leakage flow rate from the clearance 3 to be reduced. It was believed that due to this action, the internal chamber IC would rise in pressure and that the targeted pressure (high pressure performing frettage) could be reached. However, in actuality, something not predicted above was found by in-depth research of the inventors. Below, the content of this will be explained.

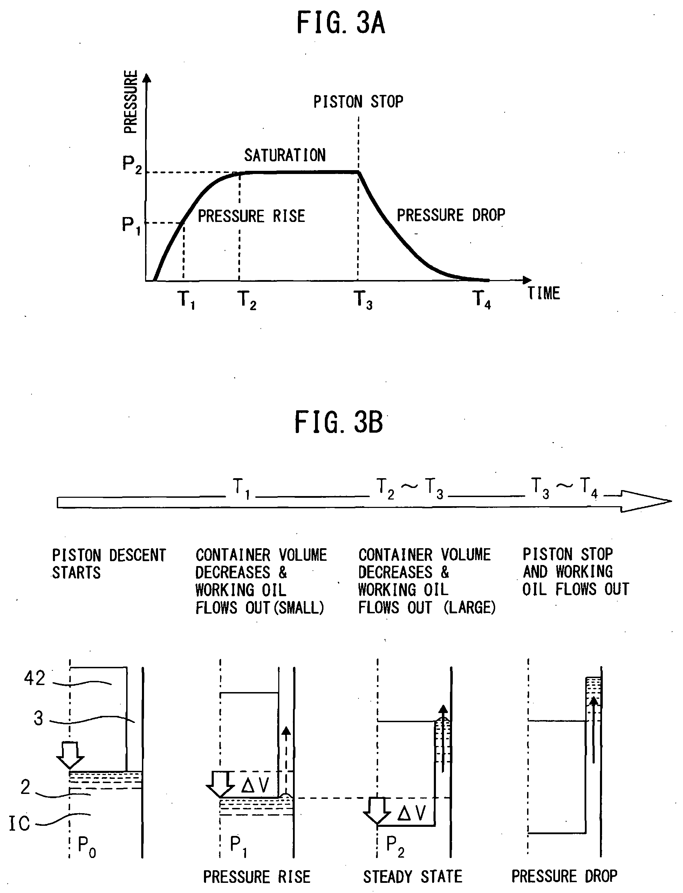

FIG. 3A is a schematic view for explaining a relationship between pressure and time in the autofrettage apparatus which is shown in FIGS. 1A and 1B when inserting the piston 42 in the internal chamber IC by a certain feed speed $v=V_0$ to raise the pressure P of the internal chamber IC, while FIG. 3B is an explanatory view which explains this situation. As shown in FIG. 3A, regardless of the previous assumptions, even if inserting the piston 42 by a predetermined feed speed $V_0$ into the internal chamber IC, the pressure P of the internal chamber IC rises up to $P_2$ up to the time $T_2$, but after that the pressure P no longer rises but ends up being saturated and therefore, it was learned, the target pressure (high pressure for performing frettage) cannot be reached.

This situation will be explained as follows using FIG. 3B. Along with the descent of the piston 42, the volume of the internal chamber IC decreases and simultaneously working oil 2 starts to flow out from the clearance 3. There is a time lag between the descent of the piston 42 and the outflow of the working oil 2, so the pressure P of the internal chamber IC rises (times $T_1$ to $T_2$). When finally the outflow of the working oil 2 (leakage flow rate) increases, the speed by which the volume of the internal chamber IC decreases also falls until the steady state is reached, so the pressure P of the internal chamber IC becomes saturated (times $T_2$ to $T_3$). In the end, if the piston 24 stops (time $T_3$), it is believed that the situation arises where the working oil 2 just flows out and pressure becomes 0 (time $T_4$).

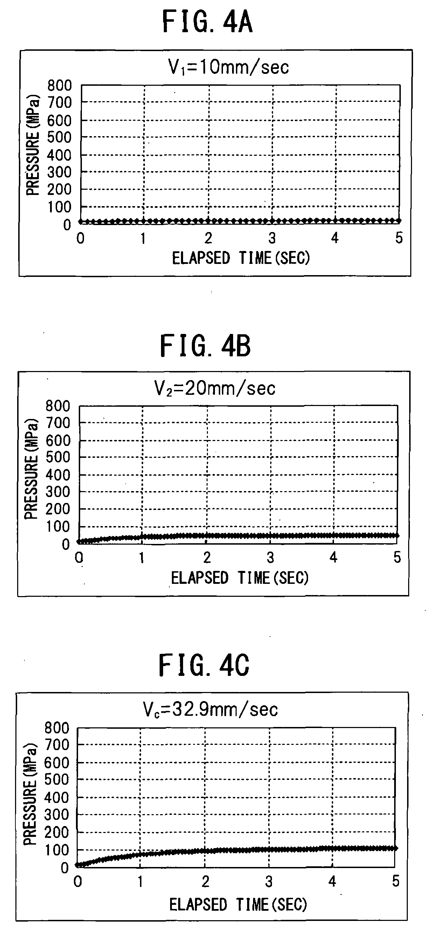

Next, a relationship between pressure and time when changing the constant feed speed "v" will be explained. FIGS. 4A to 4E are graphs which show the relationship of pressure and time when changing the predetermined feed speed when inserting the piston 42 into the internal chamber IC to $V_1$ to $V_4$. If gradually raising the predetermined feed speed "v" of insertion of the piston 42 into the internal chamber IC to $V_1$ to $V_4$, with the feed speeds $V_1$, $V_2$, and Vc, in the same way as the schematic view which is shown in FIG. 3A, a graph is obtained where the pressure rises and finally becomes the saturated state, but at the feed speeds $V_3$ and $V_4$ over the feed speed Vc, the pressure does not become saturated. It is learned that along with the elapse of time, the pressure P of the internal chamber IC rises until a superhigh pressure level.

That is, in the autofrettage apparatus which is shown in FIGS. 1A and 1B, when the piston 42 is inserted by a certain feed speed into the internal chamber IC to try to make the pressure P of the internal chamber IC rise, if the feed speed "v" of the piston 42 becomes larger than the feed speed Vc (critical feed speed), the pressure P of the internal chamber IC can be made to rise to a superhigh pressure level along with the elapse of time without becoming saturated. In this way, the feed speed when shifting to a characteristic whereby the pressure P of the internal chamber IC rises to the superhigh pressure level along with the elapse of time without the pressure P becoming saturated is set as the critical feed speed Vc.

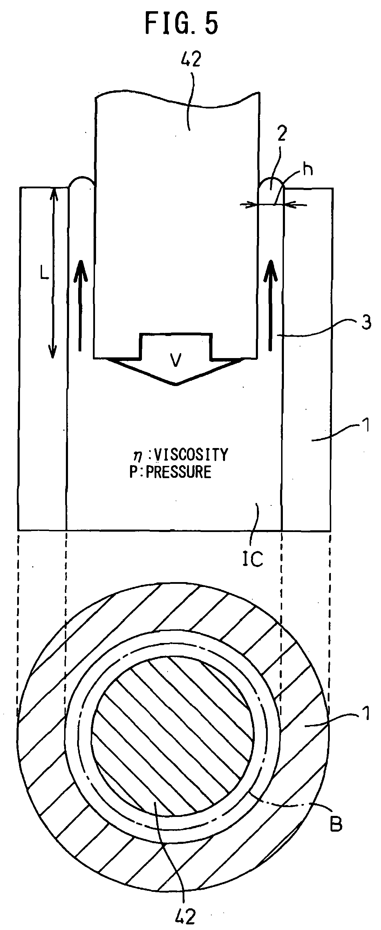

Next, the method of finding the above critical feed speed Vc will be explained by an example. Note that the method of finding the critical feed speed Vc may be determined by experiments. FIG. 5 is an explanatory view for analyzing the relationship between the leakage flow rate and the pressure and shows the state where the piston 42 being inserted inside of the work 1 causes working oil 2 to leak out. The leakage flow rate Q from the clearance 3 (average clearance amount "h") can be expressed by the following general formula:

$$Q=C\times(B/12L)\times(h^3/\eta)\times\Delta P\cdots\text{formula 2}$$

Here, B is the seat circumferential length (circumferential length of center part of clearance 3), L is the seat width (width of region where clearance 3 is formed), "h" is the average clearance amount of the clearance 3, $\eta$ is the viscosity coefficient of the working oil 2, and $\Delta P$ is the pressure difference of the inlet and outlet of the clearance 3. C is a constant which is determined by the surface shape between the piston and the work inside walls. At the time of a polished surface with a surface roughness Rz=3.2 or so, C=1.

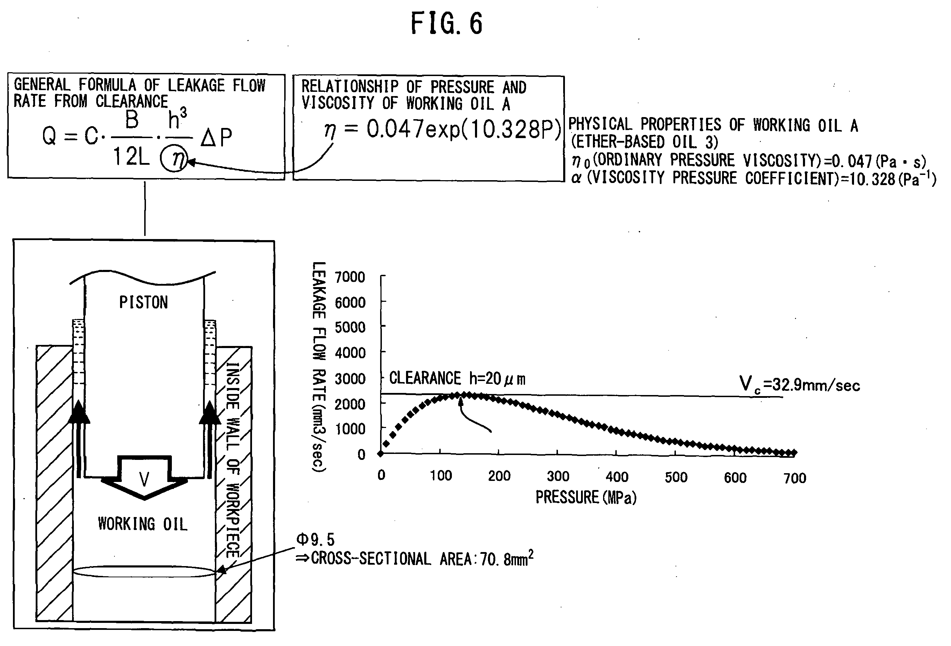

The formula (1) is used as the basis to calculate the working oil viscosity $\eta$ at the time of the pressure P in the internal chamber IC. At this time, the ordinary pressure viscosity $\eta_0$ and viscosity-pressure coefficient $\alpha$ are unambiguously determined by the type of the working oil 2 which is used. In the example which is shown in FIG. 6, an ether-based oil 3 which has characteristics of an ordinary pressure viscosity $\eta_0$=0.047 (Pa·s) and a viscosity-pressure coefficient $\alpha$=10.328 (Pa$^{-1}$) is used as the working oil 2. Here, the "ether-based oil 3" is working oil which is comprised of a polyoxyethylene polyoxypropylene alkyl ether.

(2) After this, formula 2 is used as the basis to calculate the leakage flow rate Q from the clearance 3 at the time of a certain pressure P of the internal chamber IC. At this time, the seat circumferential length B and average clearance amount "h" are unambiguously determined from the product shape. For the viscosity coefficient $\eta$, the value found by the above (1) is used. Note that the seat width L is a variable parameter which inherently increases along with the amount of insertion of the piston, but according to research findings of the inventors, the leakage flow rate Q may be calculated based on a fixed value of the seat width L without problem. In the example which is shown in FIG. 6, B=9.5 (mm), h=20 ($\mu$m), and L=10 (mm).

(3) Between the inside pressure 0 to 800 MPa or so, the above (1) and (2) are performed, the magnitude of the leakage flow rate Q at each pressure is found, and the largest leakage flow rate Qmax among them (called the "maximum leakage flow rate") is found.

(4) After this, the maximum leakage flow rate Qmax which was calculated at (3) is divided by the cross-sectional area A of the piston 42 to calculate the critical feed speed Vc. The leakage flow rate of the working oil 2 which flows out from the clearance 3 per unit time is equal to the volume per unit time of the piston 42 which is inserted inside of the work 1, so when the maximum leakage flow rate Qmax is reached, the feed speed of the piston 42 becomes the fastest speed, that is, the critical feed speed Vc.

The critical feed speed Vc and the maximum leakage flow rate Qmax are defined in this way. Their relationship can be expressed as follows:

```
(Critical feed speed Vc)=(maximum leakage flow rate
Qmax)/(cross-sectional area A of piston 42)···formula 3
```

In the case of the example which is shown in FIG. 6, the maximum leakage flow rate Qmax is 2329.32 (mm$^3$/sec) and the cross-sectional area A of the piston 42 is 70.8 mm$^2$, so the critical feed speed Vc becomes 32.9 (mm/sec).

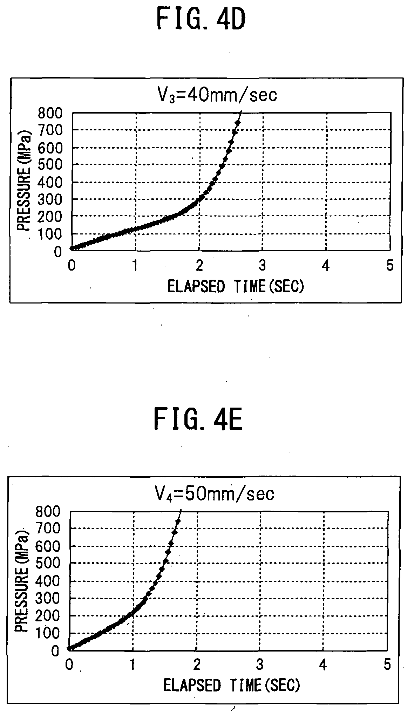

That is, if inserting the piston 42 inside the work 1 by a speed over this critical feed speed Vc=32.9 (mm/sec), as shown in FIG. 4D and FIG. 4E, it becomes possible to make the pressure P of the internal chamber IC rise up to the superhigh pressure level along with the elapse of time without becoming saturated.

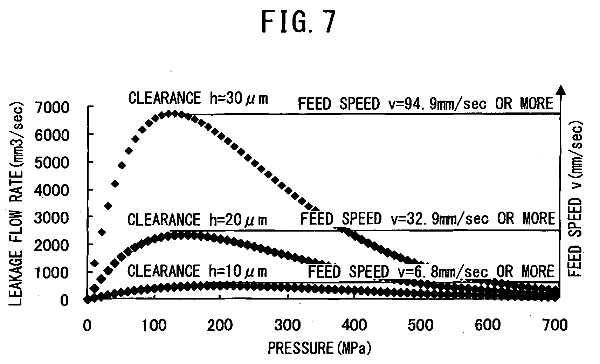

Next, the case of changing the average clearance amount "h" of the clearance 3 while using the same working oil as the working oil 2 which is shown in FIG. 6 will be explained. FIG. 7 is a graph which shows the relationship of the pressure of the internal chamber IC and the leakage flow rate when changing the average clearance amount "h" of the clearance 3. As shown in FIG. 7, even if changing the average clearance amount "h" of the clearance 3, in the graph, a peak value, that is, the maximum leakage flow rate Qmax, occurs in the process of change of the pressure, so in the same way as above, it is sufficient to calculate the critical feed speed Vc corresponding to the individual average clearance amounts. Next, the case of using a working oil different from the working oil 2 which is shown in FIG. 6 while changing the average clearance amount "h" of the clearance 3 will be explained.

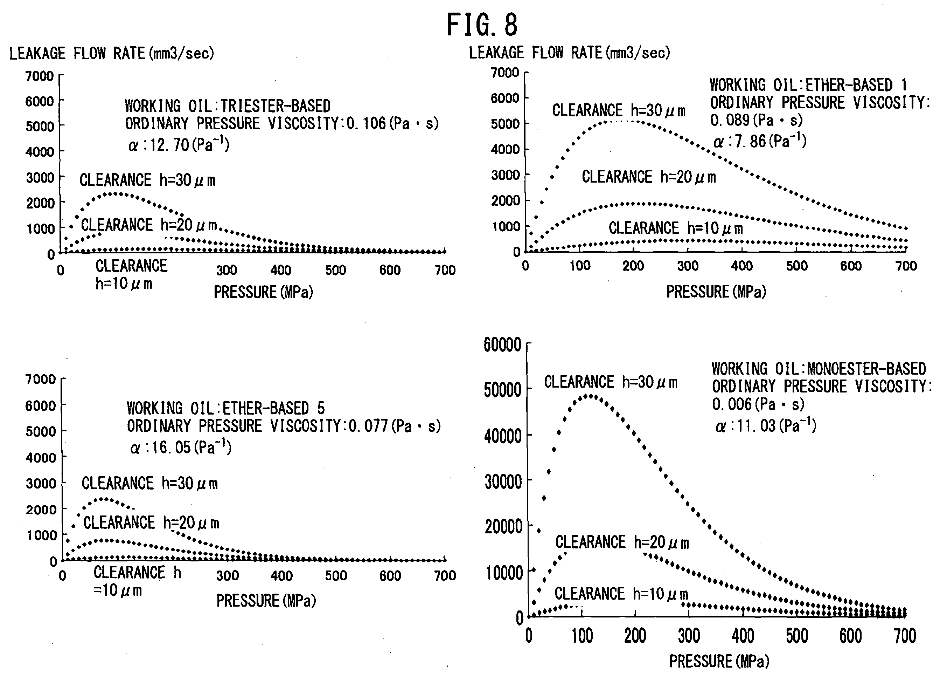

FIG. 8 is a graph which shows the relationship between the pressure of the internal chamber IC and the leakage flow rate when changing the type of the working oil and the average clearance amount. As the type of the working oil, a triester-based oil, ether-based oil 1, ether-based oil 5, and monoester-based oil are illustrated. Here, the "ether-based oil 1" is a working oil which is comprised of polyethyleneglycol, while the "ether-based oil 5" is a working oil which is comprised of a polyoxypropylene dialkyl ether. As shown in FIG. 8, even if using as the working oil the above working oils which are different from that shown in FIG. 6 and even if changing the average clearance amount "h" of the clearance 3 by the above working oil, it is learned that, in the graph, a peak value, that is, the maximum leakage flow rate Qmax, occurs in the process of change of the pressure.

According to the above explained direct pressurization type autofrettage, by finding the maximum leakage flow rate Qmax from the characteristics of the working oil used (working oil viscosity $\eta$) and the specifications of the clearance 3 between the work 1 and the piston 42 (average clearance amount "h", seat width L, and seat circumferential length B) and using the maximum leakage flow rate Qmax and the specifications of the piston 42 (cross-sectional area A) as the basis to calculate the critical feed speed Vc, if driving the piston 42 by a speed faster than that critical feed speed Vc, it is possible to raise the pressure to the target pressure which is required for autofrettage (as one example, 700 MPa to 800 MPa). Due to this, direct pressurization type autofrettage enables seal rings to be eliminated and enables the increase in cost due to wear of the seal rings to be reduced.

Various Restrictions in Direct Pressurization Type Autofrettage

Direct pressurization type autofrettage, as explained above, solves the problems of autofrettage of the prior art, but various restrictions arise due to feed speed limit of the pressurizing part for pressurizing the autofrettage working oil, the product shape, etc.

One is for example the insufficient output of the drive motor for driving the pressurizing part 40 or the suitable output limit as seen from the lifetime. Due to these factors, the feed speed "v" sometimes cannot rise to the critical feed speed Vc. Further, in the control circuit for controlling the drive motor or the pressure control device for the autofrettage (for example, pressure control of for how many seconds to apply a predetermined pressure or more), if the object to be controlled is just too fast, the restriction will arise that the control circuit and/or device cannot perform control suitably. For this reason, utilizing a certain extent of slower speed facilitates control. The feed speed "v" has to be limited to about 70% of the normal maximum output. In this way, due to the various restrictions which arise due to the drive motor, pressure control circuit, etc., there is an upper limit to the feed speed "v", so sometimes the feed speed v cannot be raised to the critical feed speed Vc.

As one of the measures for dealing with the limit feed speed due to the drive motor or its control device, there is the following. If explaining this as an example, when performing direct pressurization type autofrettage in the state where the seat width L=a and by a first critical feed speed Vca or more, due to the various restrictions which arise due to the drive motor, pressure control circuit, etc., sometimes the feed speed "v" cannot be raised to the first critical feed speed Vca. That is, if referring to the maximum feed speed in the restrictions the "limit feed speed $V_0$", this is the case where $V_0<Vca$.

In this case, if just able to make the seat width L of the piston a value "b" which is longer than "a", it is possible to perform direct pressurization type autofrettage by a feed speed "v" larger than the second critical feed speed Vcb. The first critical feed speed Vca and second critical feed speed Vcb are respectively determined by formulas 2 and 3 based on L=a and b. The second critical feed speed Vcb is smaller than the first critical feed speed Vc since b>a.

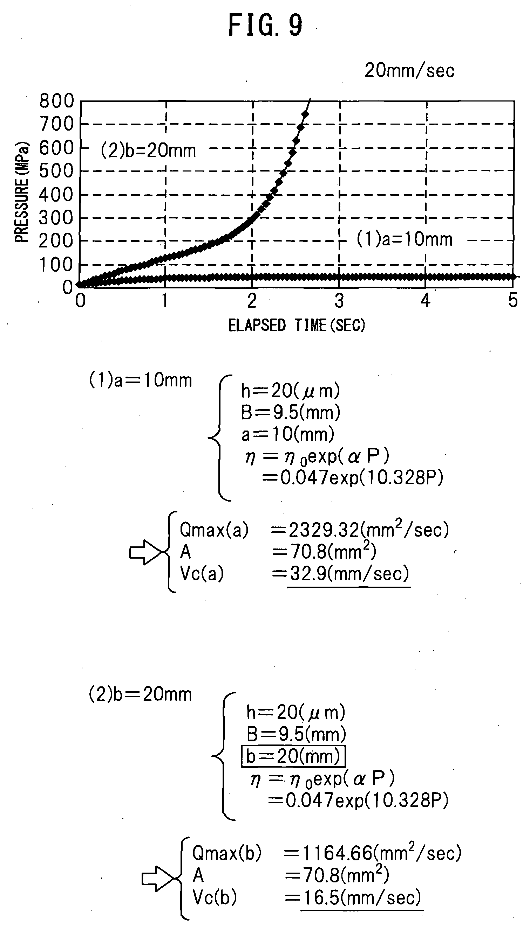

FIG. 9 is a graph which shows the waveform of pressure rise when changing the seat width L of the clearance 3 from "a" to "b". The waveform of pressure rise when changing the seat width L of the clearance 3 from a=10 mm to b=20 mm clearly shows that autofrettage becomes possible. The critical feed speed Vca=32.9 mm/sec in the case of a=10 mm falls to the critical feed speed Vcb=16.5 mm/sec in the case of b=20 mm. If making the seat width L of the piston a value "b" which is longer than "a" in this way, it is possible to make the predetermined feed speed "v" faster than the second critical feed speed Vcb and set it to a suitable value less than the limit feed speed $V_0$. However, depending on the work 1, due to the product shape etc., sometimes the seat width L of the piston will not be able to be made the value "b" which is longer than "a".

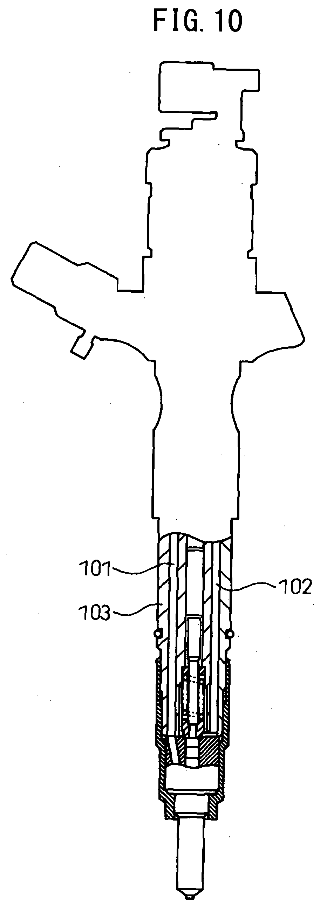

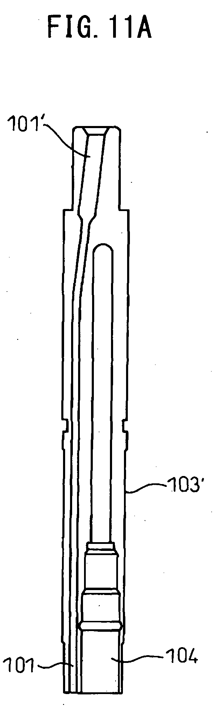

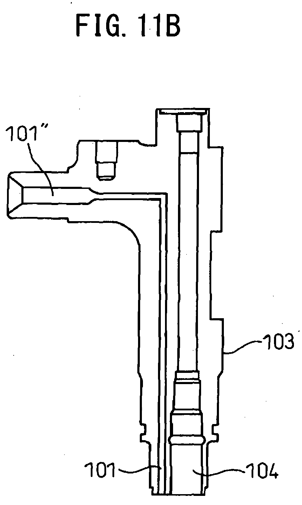

Further, when performing direct pressurization type autofrettage, the following restriction (example of case of short stroke) will sometimes occur due to the shape of the work to be worked: FIG. 10 is one example of a fuel injector which is used in a diesel engine. FIGS. 11A and 11B are cross-sectional views which show examples of members which are used for fuel injectors. The case where the worked object is a fuel injector which is used in a diesel engine (as one example, see Japanese Unexamined Patent Publication No. 2009-203843 etc.) will be explained. This fuel injector has a high pressure side duct 101 to which fuel is supplied from a common rail and a low pressure side duct 102 which returns to the fuel tank the fuel which remains without being injected up until the valve is closed. As shown in FIG. 10, at the large diameter part 104 at the inside of the fuel injector body 103 (see FIGS. 11A and 11B), the piston etc. are placed so as to move up and down at the center of the body by an actuator (solenoid or piezoelectric device), so the high pressure duct 101 which performs the autofrettage inevitably ends up becoming off-centered. For this reason, the upper duct 101' of the lower body 103' which is shown in FIG. 11A ends up tilting and becoming relatively short. Further, even in the case such as shown in FIG. 11B, the duct 101'' is often relatively short. If the duct for autofrettage is short, sometimes the feed speed of the piston will exceed the critical feed speed Vc and it will not be possible to secure the stroke required for reaching the predetermined pressure.

Further, the case where the worked object is a part of a common rail system for a diesel engine will be explained. The fuel which is discharged from the fuel pump is supplied to the common rail under pressure. The common rail stores the fuel which was pumped from the fuel pump at a high pressure state and supplies it to the fuel injectors of the cylinders through high pressure ducts. The work 1 of FIG. 2 illustrates a common rail, so a plurality of pipe openings 23 are provided for feeding fuel to the fuel injectors of the cylinders. In the work 1 which is shown in FIG. 2, autofrettage has to be performed at least at the intersecting hole end X, so the distance from one end side of the work 1 to the intersecting hole end X has to be made longer than the stroke which is required for reaching the desired pressure. However, depending on the shape of the work 1, sometimes the distance from one end side of the work 1 to the intersecting hole end X is shorter than the stroke necessary for reaching the predetermined pressure.

In this way, there are various restrictions in direct pressurization type autofrettage which inserts a piston 42 into the inside walls of one end part of the work 1. If again summarizing these restrictions, the following may be illustrated.

(1) Case where due to capacity of pressurizing part, predetermined feed speed of piston cannot be accelerated.
(2) Case where due to capacity of pressurizing part, pushing pressure of piston cannot be secured, for example, case where internal chamber IC of work is too large in inside diameter and load on pressurizing part is too large.
(3) Case where due to work shape, stroke cannot be secured.
(4) Case where due to work shape, diameter of inserted piston is too small and problem arises in strength of inserted piston, that is, diameter of internal chamber IC of the work is too small and the piston cannot be inserted.

The present invention provides a solution to the various restrictions which arise due to the feed speed limit of the working part, the product shape, etc. explained above.

One Embodiment of Present Invention

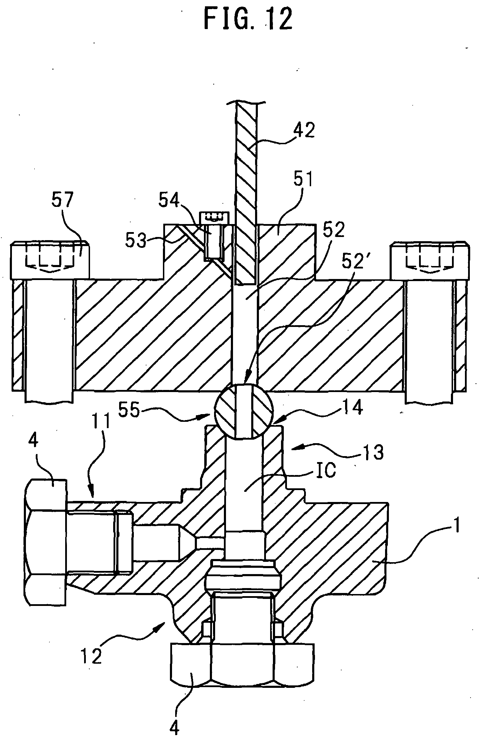

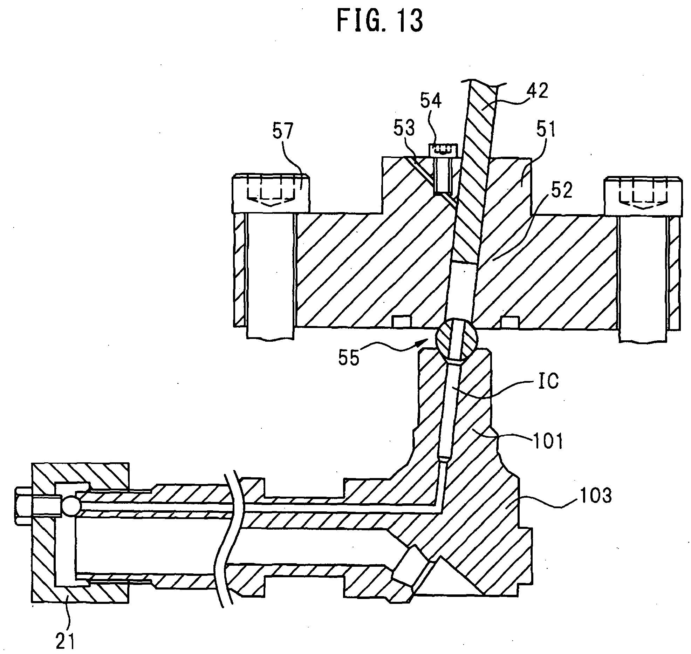

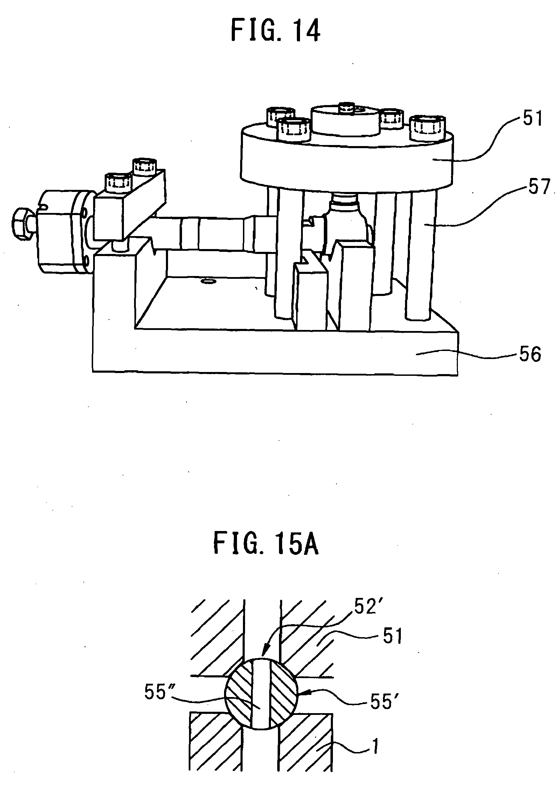

FIG. 12 and FIG. 13 are schematic cross-sectional views which explain an embodiment of the present invention. In FIG. 12, the work 1 is a high pressure feed pump, while in FIG. 13, the work 1 is a fuel injector body 103. FIG. 14 is a schematic perspective view which explains one embodiment of the present invention of FIG. 13. Note that, the high pressure feed pump 1 of FIG. 12 pumps fuel to the common rail, so is known from Japanese Unexamined Patent Publication No. 2010-229924A etc. At the part 11 of FIG. 12, a discharge valve is screwed, while at the part 12, a suction valve is screwed. A plunger is inserted into the IC at the inside of the part 13. The outer circumference of the part 13 forms a cylindrical surface and is not formed with a thread.

First, the outline of one embodiment of the present invention will be explained. In one embodiment of the present invention, when there are the above such various restrictions on the work 1 for autofrettage, a jig which can be attached to and detached from the work 1 is prepared to perform the autofrettage. Inside of the jig, there is a straight channel 52. The straight channel 52 is communicated with the end opening 14 of the work 1 through the seal part 55. Further, the piston 42 is not inserted into the work. The piston 42 is inserted at the straight channel 52 of the jig 51 by the critical feed speed Vc or more. Due to this, working oil 2 raised to a superhigh pressure can be filled through the communicating hole 55'' of the seal member 55' to the internal chamber IC of the work 1.

By doing this, even when there are various restrictions due to the feed speed limit, product shape of the work, etc., it is possible to freely design the seat width L and seat circumferential length B as seen in formula 2 at the jig 51 which can be attached to and detached from the work 1 and the critical feed speed Vc can be suitably set.

That is, regarding the previously illustrated restrictions (1) and (3), even if the seat width L or stroke cannot be secured at the work 1, it is sufficient to secure the seat width L or stroke at the jig 51. Regarding (2), even if the inside diameter of the internal chamber ID of the work is too large (cross-sectional area is large) and the load on the pressurizing part is too great, it is possible to reduce the diameter of the straight channel 52 of the jig 51 (cross-sectional area is small), so it is possible to lighten the load of the motor of the pressurizing part. Regarding (4), even if the inside diameter of the internal chamber IC of the work is too small, the diameter of the inserted piston 42 is small, and a problem arises in strength, the diameter of the straight channel 52 of the jig 51 can be enlarged, so the problem of the strength due to the diameter of the piston 42 can be solved.

Below, referring to FIGS. 12 and 13, one embodiment of the present invention will be explained. In FIG. 12, the work 1 is a high pressure feed pump, while in FIG. 13, the work 1 is a fuel injector body 103, but the present embodiment is not limited to these works. In FIG. 12, the work 1 is a high pressure feed pump. The work 1 is placed on a not shown base 56 (see FIG. 14) by V-blocks etc. A seal member 55' is inserted in the end opening 14 of the work 1 (work end opening) and end opening 52' of the straight channel 52 (connecting end opening which is rounded or chamfered etc.) for sealing. To enable working oil 2 to be sent into the internal chamber IC, the seal member 55' is provided with a communicating hole 55''. When utilizing chamfering of the inside circumferential surface of the end opening 14 of the work 1 etc., even if deformation of the work occurs due to the seal part, no problem arises in the final product, so this is convenient.

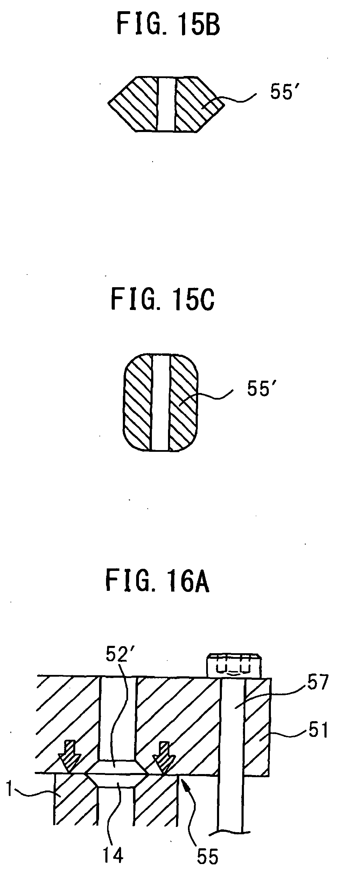

The seal member 55' must not allow seal leakage between the work 1 and the jig 51, so the jig 51 is fastened to the work by screwing in long bolts 57 at four locations of the base 56. FIGS. 15A to 15C are modifications of the seal member 55'. FIG. 15A shows the above-mentioned ball seal, FIG. 15B shows a bi-cone, and FIG. 15C shows a cylindrical shape which is rounded at its top and bottom faces. These are mere examples. The invention is not limited to these. Various modifications are possible. The point is that the seal member 55' be designed to a configuration enabling sealing matching the shapes of the end openings of the work 1 and the jig 51.

The seal member 55' may be made of not only copper or other ordinary seal metal, but also a plastic so long as being satisfactory in mechanical strength. Urethane, a fluororesin, chloroprene, and nitrile are suitable. Ethylene, butyl, etc. may also be used. As the method for selective use of a metal and plastic, when not desiring to scratch the work 1, that is, when it is essential that the seal surface and properties not be damaged when completing the product, a plastic may be used. If a part where scratching would not pose a problem (part which is chamfered at inside circumference of end opening 14 of work 1 of FIG. 12 etc.), a metal is OK. Further, even with a metal seal, there is no problem if later removing the indented parts of the work which arise due to the seal member 55' at the time of sealing after the autofrettage is finished.

When inserting the piston 42 into the straight channel 52, air is entrained, so the jig 51 is provided with an air bleed passage which is communicated with the straight channel 52. Further, the air bleed passage 53 is provided with an air bleed passage stop plug 54 so that working oil will not leak at the autofrettage. Note that, this stop plug 54 does not necessarily have to be provided at the jig 51. For example, it is also possible to provide a feed pipe which communicates with the air bleed passage 53 at the opening of the air bleed passage 53, provide a valve in the middle of that feed pipe, and use this valve to open and close the feed pipe. Further, as shown in FIG. 12, even if the stroke of the internal chamber IC is insufficient and the stroke can no longer be secured at the work 1, the jig 51 enables the stroke to be secured.

In FIG. 13, the work 1 is a fuel injector body 103. As shown in FIG. 14, the fuel injector body 103 is placed on the base 56 by V-blocks etc. A seal member 55' is used to seal the end opening of the internal chamber IC of the fuel injector body 103 and the end opening of the straight channel 52. The seal member 55' must not have seal leakage, so the jig 51 is fastened to the fuel injector body 103 by screwing long bolts 57 at four locations or so of the base 56. The outlet of the high pressure duct 101 is sealed by a seal ball 20 by a screw cap 21. The result is similar to the case of FIG. 12.

If assuming the case of FIG. 13 to be the case where the internal chamber IC is too small in diameter and the piston cannot be inserted, the jig 51 can be used to increase the diameter of the straight channel 52, so the problem of the strength due to the diameter of the piston 42 can be solved.

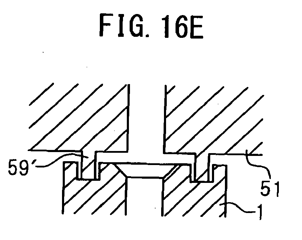

FIGS. 16A to 16E are cross-sectional views which show other modifications of the seal part 55. In FIGS. 12 and 13, the seal member 55' was used to form the seal part 55. The seal part 55 need not use the seal member 55'. As shown in FIG. 16A, it is also possible to directly join the end opening face of the work 1 and the end opening face of the jig 51 to form the seal part 55. In this case, it is necessary to make the machining precision of the end opening faces of the work 1 and the jig 51 a good one. In this case as well, there must be no seal leakage between the work 1 and the jig 51, so the jig 51 is fastened to the work by screwing long bolts 57 at four locations or so of the base 56. Depending on the case, to prevent seal leakage, it is possible to somewhat raise the fastening torque of the long bolts 57 or increase the bolt diameter.

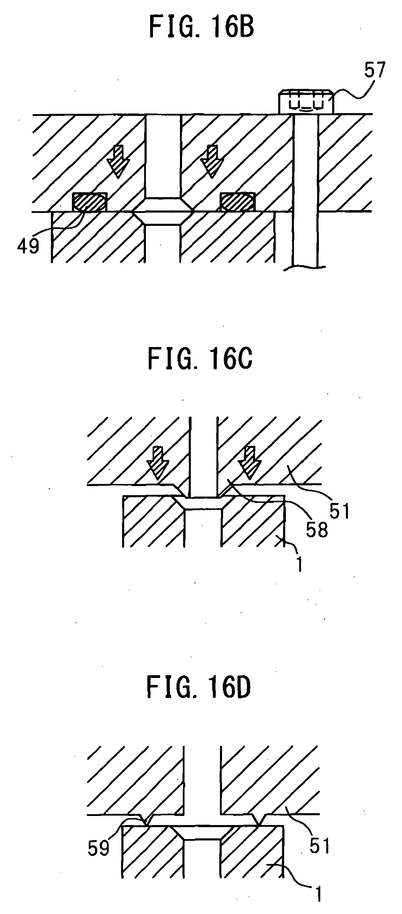

In FIG. 16B, an 0-ring 49 is used to form the seal part 55. In the case of FIGS. 16A and 16B, this is effective when a large space can be taken at the end opening face of the work 1 and the end opening face of the jig 51. Further, in the case of FIGS. 16A and 16B, the tapers or rounded parts which are provided at the work end opening 14 and the connecting end opening 52' do not particularly have to be provided. When there is a taper at the work 1 as the final product, the seal part 55 can also be configured as shown in FIG. 16C. When desiring to raise the contact pressure at the edges and improve the sealing performance, as shown in FIG. 16D, it is also possible to form a ring-shaped V-cross-section projection 59. When there is an 0-ring insertion groove or other circular ring-shaped groove at the end opening face of the work 1, it is possible to utilize this and provide a circular ring-shaped projecting part 59' at the end opening face of the jig 51 so as to form the seal part 55. As seen in the fuel injector body 103 of FIG. 13, when there is a thread at the product end (sealing portion by threaded part and threaded cap 21), it is possible to provide a female thread or male thread to configure the seal part 55 so as to enable sealing with the jig 51.

As explained above, even if there are various restrictions due to the product shape etc., if preparing a jig which can be attached to a work 1 and applying autofrettage, the following various advantageous effects can be obtained. Regardless of the work shape, so long as using the straight channel 52 of the jig 51, the seat width L and seat circumferential length B and other specifications can be freely designed and the critical feed speed Vc can be suitably set. It is also possible to jointly use a jig for a plurality of products (works). It is also possible to make a jig common for a fuel injector, cylinder pump, etc. Due to this, the manufacturing cost of the jig 51 can be reduced.

If making the piston 42 smaller in diameter, a problem arises in the strength of the piston, so if the diameter of the internal chamber IC becomes too small such as in FIG. 13, the piston cannot be inserted into the internal chamber IC. However, in such a case as well, if using the jig 51, the diameter of the straight channel 52 of the jig can be made larger, so the problem in strength due to the diameter of the piston 42 can be solved. As opposed to this, if the inside diameter of the internal chamber IC of the work becomes too large (that is, the cross-sectional area becomes large), even if the load on the pressurizing part is too large, the diameter of the straight channel 52 of the jig 51 can be reduced (that is, the cross-sectional area becomes small), so the load of the motor of the pressurizing part, that is, the necessary load can be reduced. For this reason, it is possible to make the pressurizing part a small sized press-machine, so the facility can be reduced in size.

When inserting the piston 42 into the internal chamber IC of the work 1, troublesome centering and positioning work were required, but due to the jig 51, it is sufficient to perform just the work of the seal part 55, so the work becomes simple, there is no longer a need for a positioning unit, and the cycle time can be slashed. Due to this, it is possible to obtain the advantageous effects of cost reduction and suppression of overall investment (four units being enough despite five being necessary). The present invention was described with reference to specific embodiments which were selected for the purpose of illustration, but it is clear that a person skilled in the art could make numerous modification without departing from the scope of the present invention, as defined in the claims.

Reference Signs List

1 work
2 working oil
3 clearance
14 work end opening
40 pressurizing part
42 piston
51 jig
52 straight channel
52' connecting end opening
53 air bleed passage

**Claims**

1. An autofrettage apparatus comprising,

   a work (1) having a work end opening (14) and internal chamber (IC), wherein said internal chamber (IC) is closed except at said work end opening (14) and working oil (2) is filled from said work end opening (14) to said internal chamber (IC);
   a jig (51) which can be attached to or detached from said work (1) and has a straight channel (52) at its inside, said straight channel (52) being configured so as to communicate with said work end opening (14) without leakage through a seal part (55);
   a piston (42) which forms a clearance (3) which has a predetermined average clearance amount (h) with respect to an inside wall of said straight channel (52) which is provided at the inside of said jig; and
   a pressurizing part (40) which drives said piston (42),
   wherein said pressurizing part (40) drives said piston (42) so that said piston (42) becomes a predetermined feed speed (v) in said straight channel (52) which is filled by said working oil (2), and
   said predetermined feed speed (v) is made faster than a critical feed speed (Vc) which corresponds to the maximum leakage flow rate (Qmax) per unit time of said working oil (2) which leaks out from said clearance (3) due to said drive operation, whereby said work (1) is autofrettaged.

2. The autofrettage apparatus according to claim 1, **characterized in that** said jig (51) is provided with an air bleed passage (53) which communicates with said straight channel (52).

3. The autofrettage apparatus according to claim 2, **characterized in that** aid air bleed passage (53) is provided with an air bleed passage stop plug (54).

4. The autofrettage apparatus according to any one of claims 1 to 3, **characterized in that** said seal part (55) seals by pressing a seal member (55') with a communication hole (55'') which runs between a work end opening (14) of said work (1) and a connecting end opening (52') of a straight channel (52) of said jig (51) without clearance.

5. The autofrettage apparatus according to claim 4, **characterized in that** said seal member (55') is formed by a metal or plastic.

6. The autofrettage apparatus according to any one of claims 1 to 3, **characterized in that** said seal part (55) seals by pressing together or connecting a work end opening (14) of said work (1) and a connecting end opening (52') of a straight channel (52) of said jig (51) without clearance.

7. The autofrettage apparatus according to claim 6, **characterized in that** either or both of the work end opening (14) of said work (1) or the connecting end opening (52') of the straight channel (52) of said jig (51) are provided with 0-rings, ring-shaped projections, tapered surfaces, and threads.

**Patentansprüche**

1. Autofrettagevorrichtung, aufweisend:

ein Erzeugnis (1) mit einer Erzeugnisendöffnung (14) und einer inneren Kammer (IC), wobei die innere Kammer (IC) mit Ausnahme der Erzeugnisendöffnung (14) geschlossen ist, und Arbeitsöl (2) von der Erzeugnisendöffnung (14) in die innere Kammer (IC) gefüllt wird;
eine Spannvorrichtung (51), die an dem Erzeugnis (1) angebracht oder von diesem entfernt werden kann und einen direkten Kanal (52) im Inneren aufweist, wobei der direkte Kanal (52) so konfiguriert ist, dass er mit der Erzeugnisendöffnung (14) kommuniziert, ohne dass eine Leckage durch ein Versiegelungsteil (55) auftritt;
einen Kolben (42), der eine Lücke (3) bildet, der eine vorgegebene Durchschnittslückengröße (h) im Verhältnis zu einer Innenwand des direkten Kanals (52) aufweist, die sich im Inneren der Spannvorrichtung befindet; und
ein Druckbeaufschlagungsteil (40), das den Kolben (42) antreibt,
wobei das Druckbeaufschlagungsteil (40) den Kolben (42) antreibt, so dass der Kolben (42) eine vorgegebene Zuführgeschwindigkeit (v) in dem direkten Kanal (52), der mit dem Arbeitsöl (2) gefüllt ist, erreicht, und
wobei die vorgegebene Zuführgeschwindigkeit (v) schneller gemacht wird als eine kritische Zuführgeschwindigkeit (Vc), die der maximalen Leckagen-Strömungsrate (Qmax) pro Zeiteinheit des Arbeitsöls (2) entspricht, das aus der Lücke (3) aufgrund des Antriebsbetriebs leckt, wobei das Erzeugnis (1) kaltgestreckt wird.

2. Kaltstreckungsvorrichtung nach Anspruch 1, **dadurch gekennzeichnet, dass** die Spannvorrichtung (51) über eine Entlüftungspassage (53) verfügt, die mit dem geraden Kanal (52) kommuniziert.

3. Kaltstreckungsvorrichtung nach Anspruch 2, **dadurch gekennzeichnet, dass** die Entlüftungspassage (53) mit einem Entlüftungspassagenstoppstopfen (54) versehen ist.

4. Kaltstreckungsvorrichtung nach einem der Ansprüche 1 bis 3, **dadurch gekennzeichnet, dass** das Versiegelungsteil (55) dadurch eine Versiegelung herstellt, dass es ein Versiegelungselement (55') mit einem Kommunikationsloch (55"), das zwischen einer Erzeugnisendöffnung (14) des Erzeugnisses (1) und einer Verbindungsendöffnung (52') eines direkten Kanals (52) der Spannvorrichtung (51) ohne Lücke verläuft, mit Druck beaufschlagt.

5. Kaltstreckungsvorrichtung nach Anspruch 4, **dadurch gekennzeichnet, dass** das Versiegelungselement (55') aus Metall oder Kunststoff hergestellt ist.

6. Kaltstreckungsvorrichtung nach einem der Ansprüche 1 bis 3, **dadurch gekennzeichnet, dass** das Versiegelungsteil (55) dadurch eine Versiegelung herstellt, dass es eine Erzeugnisendöffnung (14) des Erzeugnisses (1) und eine Verbindungsendöffnung (52') eines direkten Kanals (52) der Spannvorrichtung (51) lückenlos zusammenpresst oder verbindet.

7. Kaltstreckungsvorrichtung nach Anspruch 6, **dadurch gekennzeichnet, dass** entweder eines oder beide von der Erzeugnisendöffnung (14) des Erzeugnisses (1) oder der Verbindungsendöffnung (52') des direkten Kanals (52) der Spannvorrichtung (51) mit O-Ringen, ringförmigen Vorsprüngen, zugespitzten Oberflächen und Gewinden versehen ist/sind.

**Revendications**

1. Appareil d'autofrettage comprenant :

une pièce (1) comportant une ouverture d'extrémité de pièce (14) et une chambre interne (IC), dans lequel ladite chambre interne (IC) est fermée, à l'exception de ladite ouverture d'extrémité de pièce (14) et de l'huile de travail (2) est introduite à partir de ladite ouverture d'extrémité de pièce (14) dans ladite chambre interne (IC) ;
un montage (51) qui peut être attaché à ou détaché de ladite pièce (1) et qui comporte un canal droit (52) à l'intérieur de celui-ci, ledit canal droit (52) étant configuré de manière à communiquer avec ladite ouverture d'extrémité de pièce (14) sans fuite à travers une partie de joint (55) ;
un piston (42) qui forme un jeu (3) qui a une quantité de jeu moyenne prédéterminée (h) par rapport à une paroi intérieure dudit canal droit (52) qui est prévu à l'intérieur dudit montage ; et
une partie de mise sous pression (40) qui entraîne ledit piston (42),
dans lequel ladite partie de mise sous pression (40) entraîne ledit piston (42) de sorte que ledit piston (42) atteigne une vitesse d'avance prédéterminée (v) dans ledit canal droit (52) qui est rempli avec ladite huile de travail (2), et

ladite vitesse d'avance prédéterminée (v) est augmentée à une valeur supérieure à une vitesse d'avance critique (Vc) qui correspond au débit de fuite maximum (Qmax) par unité de temps de ladite huile de travail (2) qui fuit à partir dudit jeu (3) du fait de ladite opération d'entraînement, moyennant quoi ladite pièce (1) est autofrettée.

2. Appareil d'autofrettage selon la revendication 1, **caractérisé en ce que** ledit montage (51) est pourvu d'un passage de purge d'air (53) qui communique avec ledit canal droit (52).

3. Appareil d'autofrettage selon la revendication 2, **caractérisé en ce que** ledit passage de purge d'air (53) est pourvu d'un bouchon d'arrêt de passage de purge d'air (54).

4. Appareil d'autofrettage selon l'une quelconque des revendications 1 à 3, **caractérisé en ce que** ladite partie de joint (55) assure l'étanchéité en pressant un élément de joint (55') avec un trou de communication (55") qui s'étend entre une ouverture d'extrémité de pièce (14) de ladite pièce (1) et une ouverture d'extrémité de liaison (52') d'un canal droit (52) dudit montage (51) sans jeu.

5. Appareil d'autofrettage selon la revendication 4, **caractérisé en ce que** ledit élément de joint (55') est constitué d'un métal ou d'une matière plastique.

6. Appareil d'autofrettage selon l'une quelconque des revendications 1 à 3, **caractérisé en ce que** ladite partie de joint (55) assure l'étanchéité en pressant ensemble ou en reliant une ouverture d'extrémité de pièce (14) de ladite pièce (1) et une ouverture d'extrémité de liaison (52') d'un canal droit (52) dudit montage (51) sans jeu.

7. Appareil d'autofrettage selon la revendication 6, **caractérisé en ce que** l'une ou l'autre ou les deux de l'ouverture d'extrémité de pièce (14) de ladite pièce (1) et de l'ouverture d'extrémité de liaison (52') du canal droit (52) dudit montage (51) sont pourvues de joints toriques, de protubérances de forme annulaire, de surfaces effilées, et de filets.

FIG. 1A

# FIG. 1B

# FIG. 2

# FIG. 3A

PISTON STOP

SATURATION

PRESSURE RISE

PRESSURE DROP

$P_2$

$P_1$

PRESSURE

TIME

$T_1$　$T_2$　$T_3$　$T_4$

# FIG. 3B

$T_1$ ——— $T_2 \sim T_3$ ——— $T_3 \sim T_4$ →

| PISTON DESCENT STARTS | CONTAINER VOLUME DECREASES & WORKING OIL FLOWS OUT(SMALL) | CONTAINER VOLUME DECREASES & WORKING OIL FLOWS OUT (LARGE) | PISTON STOP AND WORKING OIL FLOWS OUT |

42

3

2

IC

$P_0$　　$P_1$　　$P_2$

PRESSURE RISE　　STEADY STATE　　PRESSURE DROP

$\Delta V$　　$\Delta V$

# FIG. 4A

# FIG. 4B

# FIG. 4C

# FIG. 4D

$V_3 = 40mm/sec$

# FIG. 4E

$V_4 = 50mm/sec$

# FIG. 5

η : VISCOSITY
P : PRESSURE

# FIG. 6

| GENERAL FORMULA OF LEAKAGE FLOW RATE FROM CLEARANCE | RELATIONSHIP OF PRESSURE AND VISCOSITY OF WORKING OIL A |
|---|---|
| $$Q = C \cdot \dfrac{B}{12L} \cdot \dfrac{h^3}{\eta} \Delta P$$ | $$\eta = 0.047\exp(10.328P)$$ |

PHYSICAL PROPERTIES OF WORKING OIL A
(ETHER-BASED OIL 3)
$\eta_0$ (ORDINARY PRESSURE VISCOSITY)=0.047 (Pa · s)
$\alpha$ (VISCOSITY PRESSURE COEFFICIENT)=10.328 (Pa$^{-1}$)

PISTON

INSIDE WALL OF WORKPIECE

V

WORKING OIL

$\Phi$9.5
$\Rightarrow$CROSS-SECTIONAL AREA:70.8mm$^2$

CLEARANCE h=20$\mu$m

$V_c$=32.9mm/sec

LEAKAGE FLOW RATE(mm3/sec)

PRESSURE (MPa)

EP 2 789 409 B1

# FIG. 7

# FIG. 8

LEAKAGE FLOW RATE (mm3/sec)

WORKING OIL:TRIESTER-BASED
ORDINARY PRESSURE VISCOSITY:0. 106 (Pa · s)
$\alpha$ :12. 70 (Pa$^{-1}$)

CLEARANCE  h=30$\mu$m

CLEARANCE  h=20$\mu$m

CLEARANCE
h=10$\mu$m

PRESSURE (MPa)

LEAKAGE FLOW RATE (mm3/sec)

WORKING OIL:ETHER-BASED 1
ORDINARY PRESSURE VISCOSITY:
0. 089 (Pa · s)
$\alpha$ :7. 86 (Pa$^{-1}$)

CLEARANCE  h=30$\mu$m

CLEARANCE  h=20$\mu$m

CLEARANCE  h=10$\mu$m

PRESSURE (MPa)

WORKING OIL:ETHER-BASED 5
ORDINARY PRESSURE VISCOSITY:0. 077 (Pa · s)
$\alpha$ :16. 05 (Pa$^{-1}$)

CLEARANCE  h=30$\mu$m

CLEARANCE  h=20$\mu$m

CLEARANCE h
=10$\mu$m

PRESSURE (MPa)

WORKING OIL:MONOESTER-BASED
ORDINARY PRESSURE VISCOSITY:
0. 006 (Pa · s)
$\alpha$ :11. 03 (Pa$^{-1}$)

CLEARANCE  h=30$\mu$m

CLEARANCE  h=20$\mu$m

CLEARANCE  h=10$\mu$m

PRESSURE (MPa)

EP 2 789 409 B1

# FIG. 9

20mm/sec

(1)a＝10mm
$\begin{cases} h=20(\mu m) \\ B=9.5(mm) \\ a=10(mm) \\ \eta = \eta_0 exp(\alpha P) \\ \quad =0.047exp(10.328P) \end{cases}$

$\Rightarrow \begin{cases} Qmax(a) = 2329.32(mm^2/sec) \\ A \quad\quad = 70.8(mm^2) \\ Vc(a) \quad = \underline{32.9(mm/sec)} \end{cases}$

(2)b＝20mm
$\begin{cases} h=20(\mu m) \\ B=9.5(mm) \\ \boxed{b=20(mm)} \\ \eta = \eta_0 exp(\alpha P) \\ \quad =0.047exp(10.328P) \end{cases}$

$\Rightarrow \begin{cases} Qmax(b) = 1164.66(mm^2/sec) \\ A \quad\quad = 70.8(mm^2) \\ Vc(b) \quad = \underline{16.5(mm/sec)} \end{cases}$

# FIG. 10

# FIG. 11A

# FIG. 11B

# FIG. 12

# FIG. 13

EP 2 789 409 B1

## FIG. 14

## FIG. 15A

## FIG. 15B

55′

## FIG. 15C

55′

## FIG. 16A

52′

57

51

1

14   55

FIG. 16B

FIG. 16C

FIG. 16D

FIG. 16E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006054440
- DE 102006054440 B3
- JP 2004092551 A
- FR 2958572 A1
- JP 2009203843 A
- JP 2010229924 A

**Non-patent literature cited in the description**

- *Tribologist,* 2004, vol. 49 (9), 720-721